# EUROPEAN PATENT APPLICATION

(11) **EP 1 564 156 A1**
(43) Date of publication of application: **17.08.2005**
(21) Application number: 03758912.4
(22) Date of filing: 27.10.2003
(51) Int. Cl.: B65D 85/57, G11B 23/023

(54) **CASE**

(30) Priority: 28.10.2002 JP 2002312417
(71) Applicant: MATSUSHITA ELECTRIC INDUSTRIAL CO., LTD., Kadoma-shi, Osaka 571-8501 (JP)
(72) Inventor: TABUCHI, Shuji, Tomada-gun, Okayama 708-0365 (JP)
(74) Representative: Stippl, Hubert, Dipl.-Ing.
(86) International application number: PCT/JP2003/013677
(87) International publication number: WO 2004/037679

(57) **Abstract**

A case for holding a cartridge for a disc-shaped information medium, comprising a lower half provided on the recording side of the disc-shaped information medium and an upper half provided so as to engage with the lower half with the disc-shaped information medium sandwiched therebetween in order to allow the disc-shaped information medium to be rotatably held, in which an opening window for exposing the recording side of the disc-shaped information medium in its radial direction is formed in the lower half provided for the cartridge, and shutters for opening and closing the opening window are provided between the lower half and the disc-shaped information medium, wherein said case comprises a bottom panel provided so as to be facing the lower half of the cartridge, a plurality of latching members provided to the bottom panel for latching the cartridge, and a release member provided on the bottom panel so as to lift up the lower case of the cartridge in order to release the latching of the cartridge with one of the plurality of latching members.

## Description

### Technical Field

The present invention relates to a case that holds a cartridge in which a disc-shaped information medium is rotatably held.

### Background Art

A DVD-RAM cartridge is an example of a cartridge that holds a disc-shaped information medium, and cases for holding such cartridges are known. A case for holding a DVD-RAM cartridge is generally in the form of a pouch having six sides that make up a hexahedral shape, of which the only open side is the one corresponding to the shutter engagement side of the cartridge. With a case such as this for holding a DVD-RAM cartridge, since the cartridge fits snugly in its holding case, there is no wobbling of the cartridge within the holding case, so there is no need for an anti-wobble mechanism.

As disclosed in JP 2001-088884A (Patent Document 1), for example, there has been proposed a cartridge holding case provided with a mechanism for preventing the wobbling of a cartridge within a holding case. This case is provided with a main body that holds a cartridge that rotatably accommodates a mini-disc, and a lid that opens and closes the main body, with the main body and the lid being formed integrally via a back wall. This case comprises a first recess in which is engaged a shutter opener of a drive provided to the shutter side end wall, a second recess provided to the cartridge peripheral surface across from the first recess, for engaging and holding another controller on the drive side, and a pair of protrusions that engage with these two recesses.

However, the technology disclosed in Patent Document 1 is constituted such that the cartridge is latched by the biasing engagement of a protrusion in a first recess provided to the shutter side end wall of the cartridge, so if the biasing force is increased in an effort to ensure secure latching of the cartridge within the holding case, the first recess can be damaged when repeatedly put into and taken out of the holding case, to the point that it no longer engages properly with the shutter opener of the drive. As a result the disc held in the cartridge cannot be recorded or reproduced with the drive.

Conversely, if the biasing force between the first recess and the protrusion is decreased, the cartridge will not be sufficiently latched within the holding case, allowing the cartridge to slide freely within the holding case, which is a problem in that external vibration, for instance, can cause the cartridge to wobble and generate noise.

It is an object of the present invention to provide a case with which external vibration will not cause a cartridge held inside to wobble and make noise, and which can hold a cartridge without placing undue load on the cartridge shutters.

Patent Document 1: JP 2001-088884A (paragraph numbers 0011, 0013, and 0014 and FIG. 1)

### Disclosure of Invention

The case according to the present invention is a case for holding a cartridge, provided with a lower half and an upper half for holding a disc-shaped information medium, an opening window provided in the lower half for exposing part of the disc-shaped information medium in its radial direction, shutters for opening and closing the opening window, a front face that engages with the shutters and links the upper half and the lower half, a rear face that is on the opposite side from the front face with the disc-shaped information medium therebetween and that links the upper half and the lower half, a pair of side faces that link the front face, the rear face, the upper half, and the lower half, and a plurality of groove portions that are recessed from one of the pair of side faces toward the other side face and are formed in the direction of the front face and the rear face, said case comprising a bottom panel provided so as to be facing the lower half of the cartridge, a plurality of latching members provided to the bottom panel, for latching the cartridge by engaging with any of the plurality of groove portions, and a release member disposed at a location near one of the plurality of latching members, for releasing the latching of the cartridge with the plurality of latching members and the plurality of groove portions.

### Brief Description of Drawings

FIG. 1A is an oblique view of a cartridge held in the case according to an embodiment;
FIG. 1B is a top plan view of a cartridge held in the case according to an embodiment;
FIG. 2 is a bottom plan view of a cartridge when the shutters according to an embodiment are closed;
FIG. 3 is a bottom plan view of a cartridge when the shutters according to an embodiment are open;
FIG. 4 is a main body plan view illustrating the opening operation of the shutters of a cartridge held in the case according to an embodiment;
FIG. 5 is a main body plan view illustrating the opening operation of the shutters of a cartridge held in the case according to an embodiment;
FIG. 6 is a top plan view of the case according to an embodiment;
FIG. 7A is a side view of the case according to an embodiment;
FIG. 7B is an oblique view schematically illustrating a construction of the case according to an embodiment;
FIG. 7C is an oblique view schematically illustrating another construction of the case according to an embodiment;
FIG. 7D is an oblique view schematically illustrating yet another construction of the case according to an embodiment;
FIG. 8 is a top plan view of the state when a cartridge has been installed in the case according to an embodiment;
FIG. 9 is a lateral cross section of the state when a cartridge has been installed in the case according to an embodiment;
FIG. 10A is a cross section illustrating a construction of the latching members provided for the case according to an embodiment;
FIG. 10B is a cross section illustrating another construction of the latching members provided for the case according to an embodiment;
FIG. 10C is a cross section illustrating yet another construction of the latching members provided for the case according to an embodiment;
FIG. 11A is a cross section illustrating a construction of the release member provided for the case according to an embodiment;
FIG. 11B is a cross section illustrating the operation of the release member provided to the case according to an embodiment;
FIG. 12A is a plan view illustrating another construction of the release member provided for the case according to an embodiment;
FIG. 12B is a cross section illustrating another construction of the release member provided for the case according to an embodiment; and
FIG. 12C is a cross section illustrating the operation of another release member provided for the case according to an embodiment.

### Best Mode for Carrying Out the Invention

With the case in an embodiment, a release member disposed at a location near one of the plurality of latching members is provided for releasing the latching of the cartridge with the plurality of latching members and the plurality of groove portions. Therefore, there is provided a case with which an installed cartridge will not wobble and make noise even when exposed to external vibration, and no undue load is placed on the shutters used for opening and closing the opening window used for exposing the recording side of the disc-shaped information medium in its radial direction.

With this embodiment, it is preferable that two of the plurality of latching members are disposed at opposite diagonal corners of the cartridge. The reason is that this suppresses wobble of the cartridge inside the case.

It is preferable that the release member is provided at the bottom panel so as to lift up the lower half of the cartridge in order to release the latching of the cartridge with said one latching member.

It is preferable that the release member is provided with said one latching member via a corner of the cartridge.

It is preferable that the release member is provided at the rear face of the cartridge.

It is preferable that the release member includes an engagement release component provided so as to be disposed between the bottom panel and the lower half of the cartridge when the cartridge has been installed in the case, a pressure release component provided so as to receive pressing force from the cartridge side toward the bottom panel side in order to release the latching of the cartridge with said one of the plurality of latching members, and a linking release component that links the engagement release component and the pressure release component. This is because the engagement release component can raise the cartridge from the bottom panel in conjunction with the pressure of the pressure release component, with the fulcrum being the junction between the engagement release component and the linking release component, and the raised cartridge can be grasped, which facilitates the latching and release of the cartridge with respect to the cartridge holding component.

It is preferable that the bottom panel is square in shape, and if the case further comprises four side panels rising from the four sides of the bottom panel, and a lid coupled to one of the four side panels and rotatably provided so as to cover the installed cartridge. The reason is that this suppresses the adhesion of dust and so forth to the disc-shaped information medium in the cartridge installed in the cartridge holding component.

It is preferable that the release member is disposed at one of the corners formed by said one side panel. The reason is that the release of the cartridge can be performed after confirming that the lid is open, which helps prevent the lid from hitting the cartridge and/or the disc-shaped information medium held in the cartridge.

It is preferable that a positioning portion for positioning one cartridge corner that is adjacent to the above-mentioned cartridge corner with which the release member engages is provided at another corner adjacent to the corner of the side panel where the release member is disposed.

It is preferable that the sides of the upper half and the lower half with which the front face of the cartridge engages are chamfered in a rounded shape, and forward positioning portions for positioning the front face having the rounded chamfering are formed on one of the side panels adjacent to the side panel to which the lid is provided.

It is preferable that at least one pedestal having a height substantially equal to the gap between the lower half and the bottom panel in a state in which the cartridge has been installed is provided within the projected surface area onto the bottom panel of the cartridge.

The cartridge held in the case according to the present invention basically comprises a disc holding component for rotatably holding a disc-shaped information medium (hereinafter referred to as "disc") in an upper half and a lower half, with the interface between the pair of halves integrated by fusion, adhesive bonding, screw, or the like. The lower half comprises an opening window for exposing part of the disc, which allows the insertion of an optical pickup for optically performing recording and/or reproduction (hereinafter referred to simply as recording), and a turntable on which the disc is placed and which is integrated with a rotation means such as a spindle motor for rotating the disc.

The upper half may have the function of engaging the lower half so that the disc will be held inside the disc holding component. For instance, the upper half may be in the form of a panel that covers the entire lower half, or it may be equipped with an opening window just like that of the lower half, or it may be equipped with an exposure hole that exposes substantially the entire disc surface on the upper half side and blocks the disc holding component only in the vicinity of the outer periphery of the disc. Further, a door may be provided to one of the side walls of the cartridge, to the lower half, or to the upper half, so that a disc can be taken out of the cartridge by opening this door. An indicator also may be provided for leaving on the cartridge a log of opening this door.

Also provided are shutters that engage with the cartridge, and the function of these shutters is to open up the opening window when the cartridge has been mounted in a recording and/or reproduction device (hereinafter referred to simply as recording device) and the disc is in the recording position, and to close the opening window when the disc is removed from the recording position. These shutters may open and close by either linear reciprocal motion substantially perpendicular to the pair of straight lines of the opening window, or may rotate reciprocally substantially around the center hole of the disc.

The opening and closing of the shutters is itself actuated by a member called a shutter opener that is provided for the recording device. A shutter engagement component that engages with this shutter opener must be provided for the cartridge. The shutter engagement component can be, for example, a recess made in the side face of the shutters in the direction perpendicular to the periphery of the disc (called the thickness direction, the height direction, etc., but called the thickness direction in this Specification), as with the cartridge discussed in Patent Document 1; a protrusion, if the side face of the cartridge where the shutter side face engages (hereinafter referred to as the shutter-side side face) protrudes from said shutter-side side face; or a convex or concave engaged component that engages with the shutters and is equipped with a side face (hereinafter referred to as side end face) that is adjacent to the shutter-side side face engaging with the shutters and that restricts the thickness direction of the cartridge.

When the above-mentioned engaged component is employed as the shutter engagement component, a configuration is generally employed in which a groove portion having a specific depth in the direction of the disc held in the cartridge is provided to the side end face, and the engaged component is substantially embedded in this groove portion, because this prevents the engaged component from protruding from the side end face of the cartridge.

With a configuration in which the shutters rotate reciprocally, the rotation of the shutters can be made smoother by working the external shape of the shutters to be rounded from the rotational center. When the external shape of the shutters is rounded, the cartridge side face also can be rounded.

The thickness of the case according to this embodiment is basically greater than the thickness of the cartridge to be held. The case main body is substantially cuboid in shape, and is provided with a cartridge holding component capable of holding the cartridge. The main body may be configured such that it comprises a partition plate in which only the cartridge holding component is concave in shape and the rest has a flat surface that is thicker than the cartridge. Alternatively, the main body may be configured such that it comprises a partition piece in which there is an outer peripheral wall of a specific thickness around just the outer peripheral part of the main body, and a partition that restricts the position of the cartridge held inside this outer peripheral wall protrudes therefrom.

If there is a snug fit between the outer peripheral wall of the cartridge and either the partition piece or the inner peripheral wall of the recess in the partition plate, then the cartridge will not move around inside the cartridge holding component, but since this requires extremely high precision, it is generally much more advantageous in terms of manufacturing cost to provide a latching member that latches the cartridge to a side wall of the cartridge holding component across from the cartridge. This latching member is equipped with a fixing engagement component that engages either with the side wall of the cartridge holding component across from the cartridge, or with the bottom panel of the main body, generates a biasing force with respect to the cartridge, and fixedly engages this cartridge.

The means for generating the biasing force can be, for example, a leaf spring, a coil spring, or another such biasing means, but since this biasing means and the fixing engagement component require the assembly of independent parts made of different materials, this can lead to an increase in the required numbers of parts and manufacturing steps. Therefore, it is generally preferable for the biasing means to be made of the same resin material that makes up the main body, and to utilize the viscoelasticity of this resin material, because this allows the latching member to be formed simultaneously with the main body.

The fixing engagement component may be configured, for example, such that it engages with the upper and lower halves of the cartridge and grasps the cartridge in its thickness direction, or configured such that it presses against the cartridge side walls with a curved or flat surface, or configured such that it presses on and engages with a groove portion provided at the cartridge side end face. When a cartridge is installed in the cartridge holding component of the case, the cartridge may be pressed in the thickness direction and pushed in against the biasing force of the latching member, and when the cartridge is taken out of the cartridge holding component, it can be pulled out by grasping the side walls of the cartridge, but since there is the danger of damaging the latching component or the engaged portion between the latching component and the partition piece, for example, depending on how much force is applied, it is preferable to provide a release component for releasing the latching of the latching component and the cartridge.

The release component can be configured such that it applies force in the opposite direction from the direction in which the latching component applies biasing force to the cartridge, but this configuration results in a complicated mechanism. In contrast, it is preferable to employ a configuration comprising an engagement release component that serves as the point of application between the cartridge and the bottom of the main body, a pressure release component that serves as the force point at which a pressing force is applied and acting force is generated at the engagement release component, and a linking release component that links the engagement release component and the pressure release component, in which the cartridge is removed from the cartridge holding component by the principle of leverage, with the junction between the linking release component and the engagement release component serving as the fulcrum. It is preferable for the release component to be provided in the vicinity of at least one of the latching components because the cartridge will be subjected to less deformation related to the position and force applied to the cartridge during release and engagement. It is also preferable for the height from the bottom of the pressure release component to be less than the thickness of the cartridge being held, because it will be easier to grasp the cartridge that has been lifted by the engagement release component when pressure is applied to the pressure release component.

It is preferable for a lid that covers the main body to be provided on the side on which a cartridge is inserted into the cartridge holding component, because this will protect against dust, scratches, and so forth when the cartridge is carried around while held in the case of the present invention, for example. A lid configuration in which the rotational axis is on at least one of the side walls of the main body, and the lid rotates around this rotational axis, is less expensive than a configuration in which the lid is a separate component, and furthermore helps prevent the lid from coming off and being lost. Furthermore, when a lid equipped with a rotational axis is employed, it is preferable for the release component to be provided in the vicinity of one corner of the main body at the side wall where this rotational axis is located, because the release of the latching component can be carried out while the lid is fully open and away from the main body.

It is also preferable for the engagement location of the engagement release component in the cartridge to be a corner of the cartridge, because when the latching of the latching component is released by the release component and the cartridge is lifted up from the cartridge holding component, the lifted part will be the corner of the cartridge, and this corner can be grasped by hand, making it easier to remove the cartridge. With a configuration such as this, it is preferable for the cartridge side face that engages with the linking release component to be different from the cartridge side face that engages with the interposed part close to the release component, because there will be more room in the main body for forming the release component.

Embodiments in which, of the configurations described above, those that are most favorable for the case and the installed cartridge according to these embodiments, will now be described through reference to the drawings.

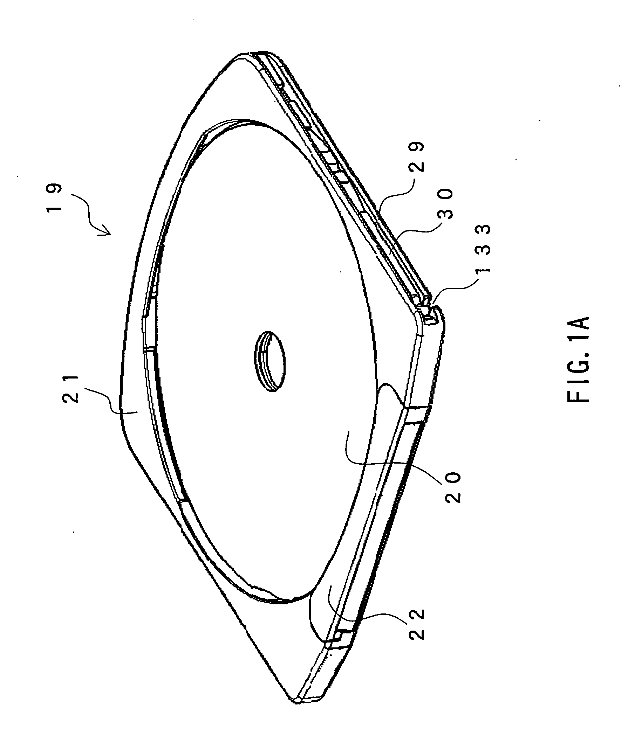

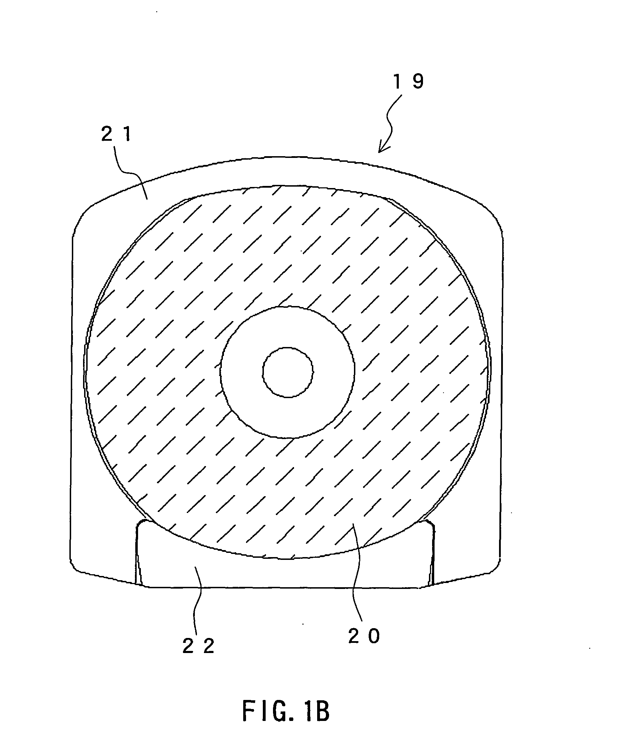

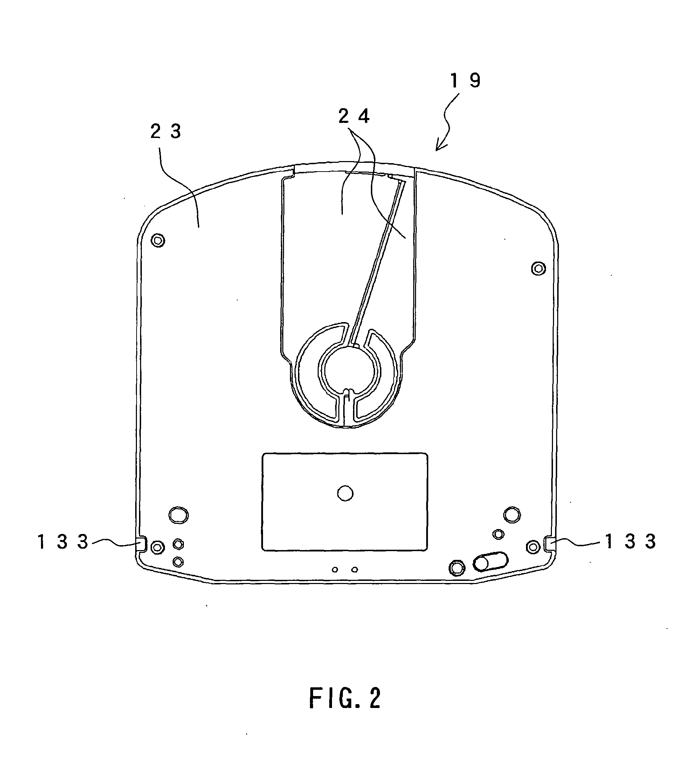

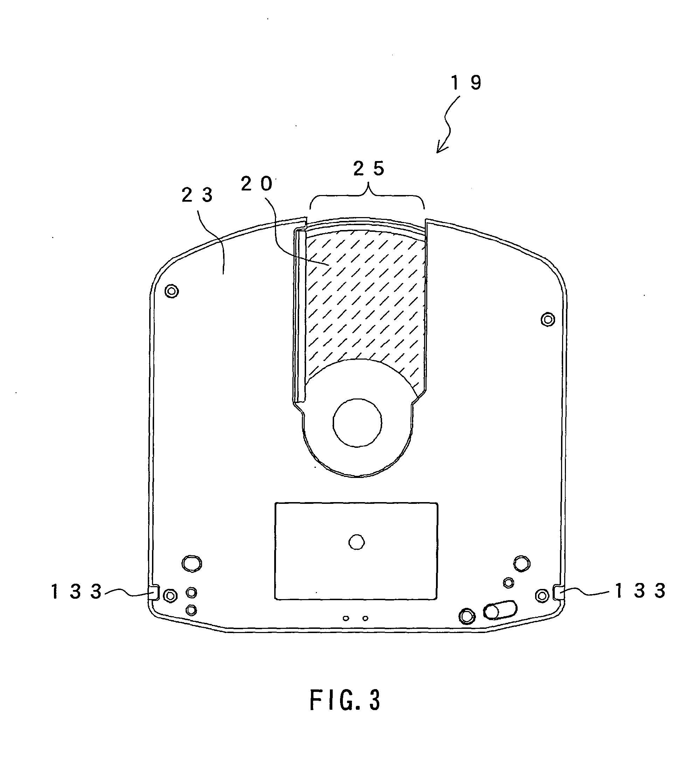

FIG. 1A is an oblique view of the configuration of a cartridge 19 held in the case according to an embodiment, and FIG. 1B is a top plan view thereof. FIG. 2 is a bottom plan view of the cartridge 19 according to this embodiment when shutters 24 are closed, and FIG. 3 is a bottom plan view of the cartridge 19 when the shutters 24 are open.

The cartridge 19 is equipped with a lower half 23. This lower half 23 is provided on the recording side of a disc 20. The cartridge 19 is also provided with an upper half 21. The upper half 21 is provided so as to engage with the lower half 23 with the disc 20 sandwiched in between, in order to rotatably hold the disc 20.

An opening window 25 for exposing the recording side of the disc 20 along its radial direction is formed in the lower half 23. An optical pickup and a turntable provided to a recording and reproduction device that records on and reproduces from the disc 20 are inserted into the opening window 25. A pair of shutters 24 for opening and closing the opening window 25 is provided between the lower half 23 and the disc 20.

An exposure hole is formed in the upper half 21 so that substantially the entire disc surface on the upper half 21 side of the disc 20 will be exposed. In order to prevent the disc 20 from falling out of the exposure hole formed in the cartridge 19, part of the outer periphery of the disc 20 is retained by the peripheral edge of the exposure hole of the upper half 21.

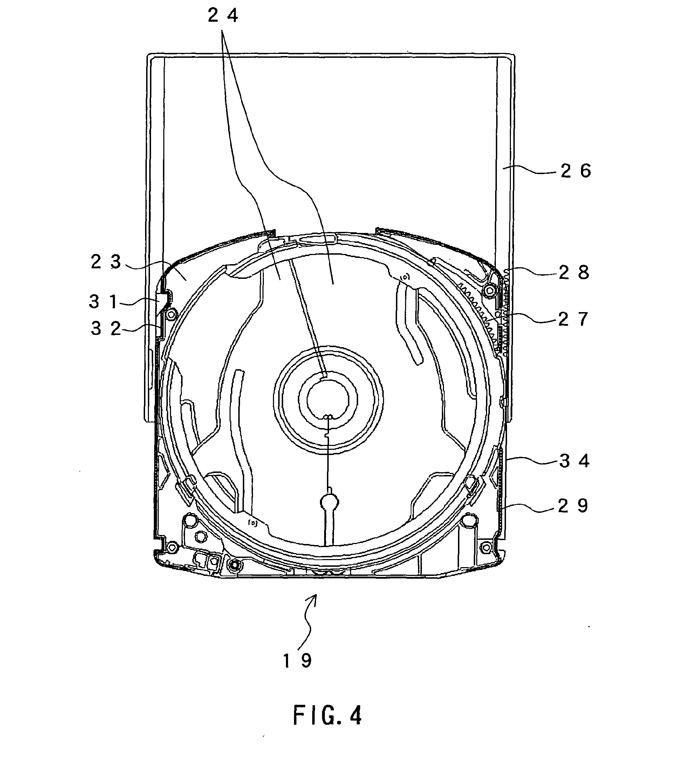

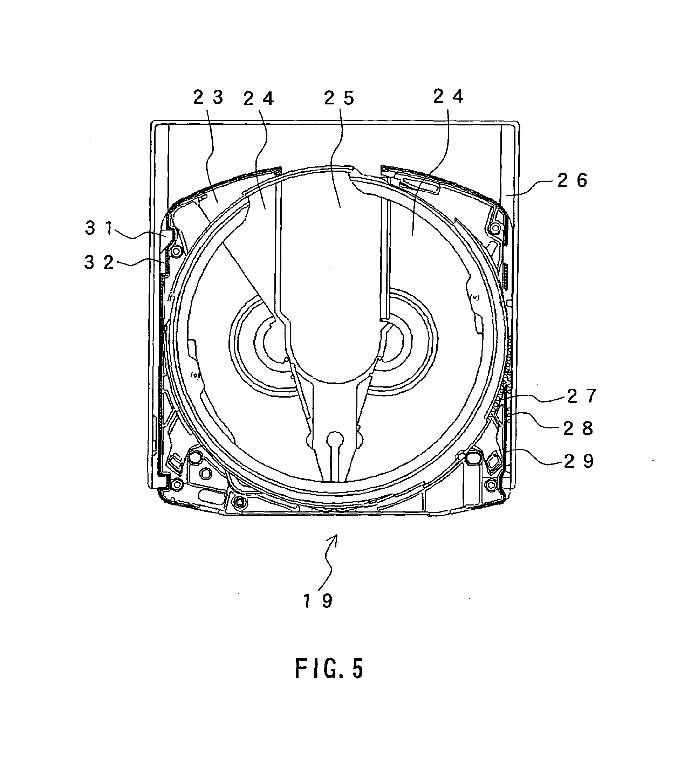

As is clear from FIGS. 2 and 3, the opening and closing of the opening window 25 by the shutters 24 employed in this embodiment is accomplished by the rotation of the shutters 24 substantially around the center hole of the disc 20. The opening and closing of the shutters 24 will be described through reference to FIGS. 4 and 5.

FIGS. 4 and 5 are plan views of the main components, and illustrate the opening of the shutters 24 provided for the cartridge 19 held in the case according to this embodiment. FIGS. 4 and 5 show how the cartridge 19 is installed in a recording and reproduction device, and illustrate the closing of the shutters 24 by the operation of the lower half 23.

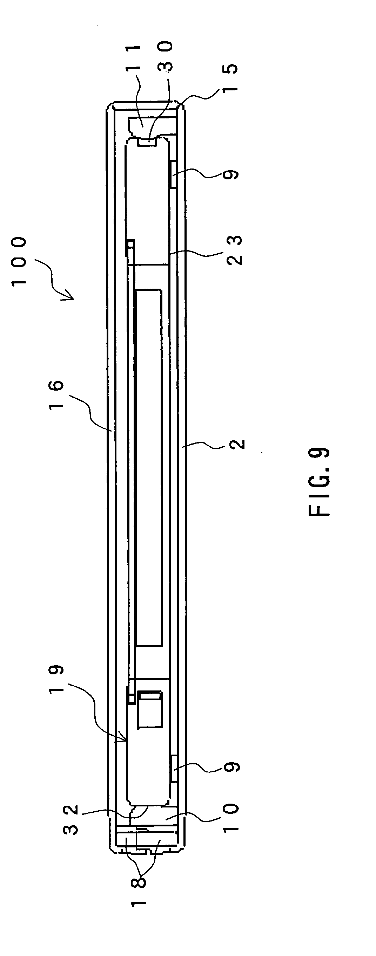

As shown in FIG. 4, when the cartridge 19 is placed on a tray (not shown) and conveyed over a housing 26 provided for the recording device, a gear 27 formed on the shutters 24 engages with a rack 28 formed on the side face of the housing 26. The outer periphery of the opening and closing mechanism of the shutters 24 where the gear 27 is formed protrudes from a shutter-side side wall 29 provided to the lower half 23, and is disposed in substantially the same plane as a side wall face 34 discussed below. Specifically, the lower half-side side wall 29 constitutes the lower half 23 side of a groove portion 30 (see FIG. 9 discussed below, for example) recessed toward the disc 20 side (see FIG. 3) beyond the side end face 34.

The rack 28 provided at the side face of the housing 26 as above engages with the gear 27 formed on the shutters 24 in the course of passing through the interior of the groove portion 30, thereby opening or closing the shutters 24. The side face of the cartridge 19 across from the side end face 34 also is equipped with a lower half-side wall recess 32 forming a groove engaging a tray engagement tab 31 provided to the side face of the tray (not shown), which restricts the placement position on the tray in the conveyance direction of the cartridge 19.

FIG. 5 shows the lower half 23 when the shutters 24 have been opened by engagement of the rack 28 and the gear 27 in conjunction with the conveyance of the tray. The shutters 24 can be closed by reversing the opening operation in conjunction with the movement of the tray in the direction of ejection from the housing 26.

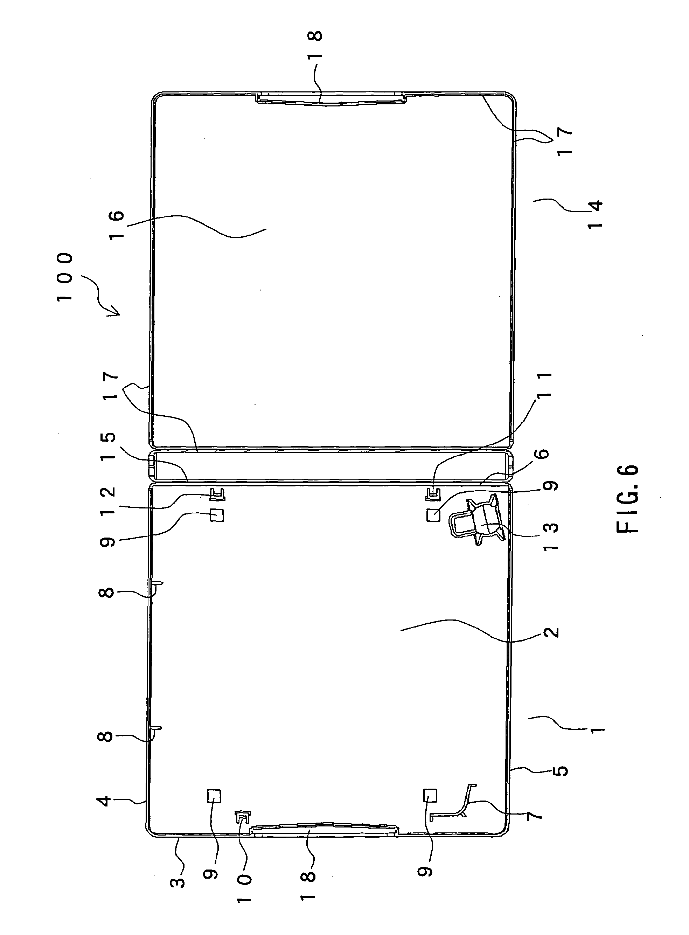

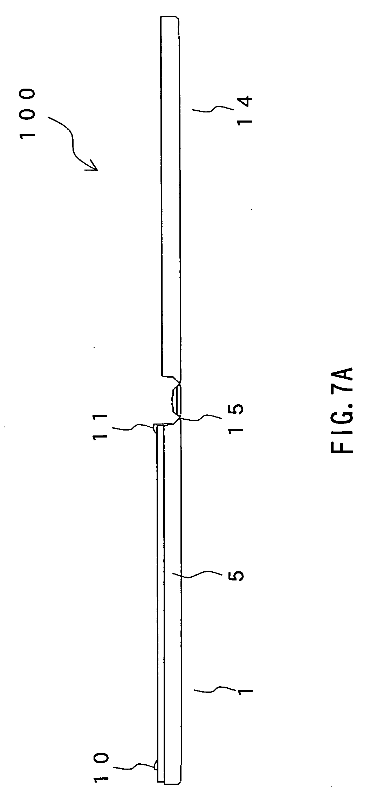

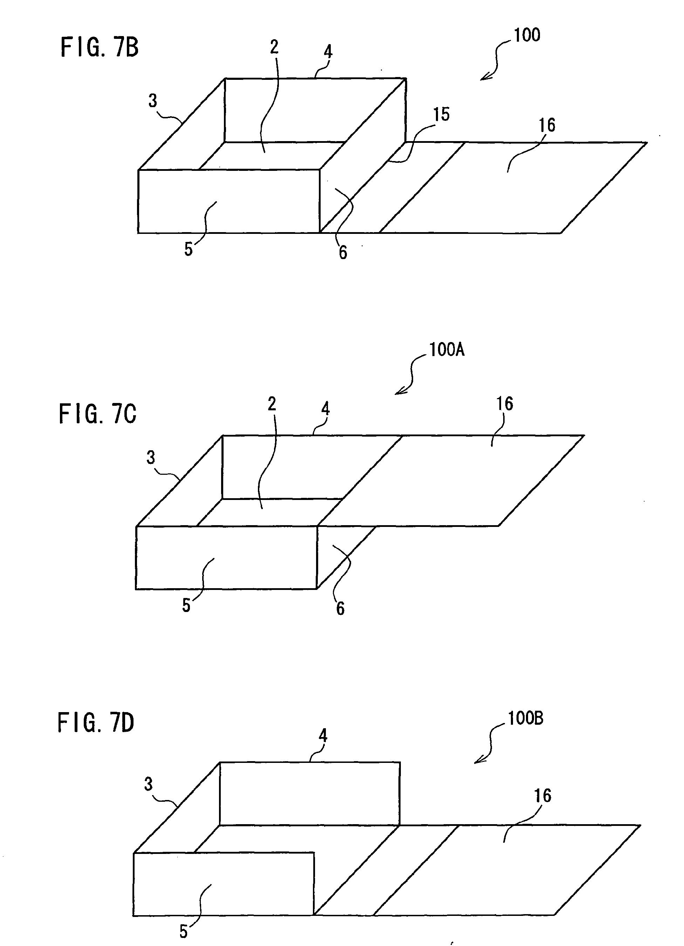

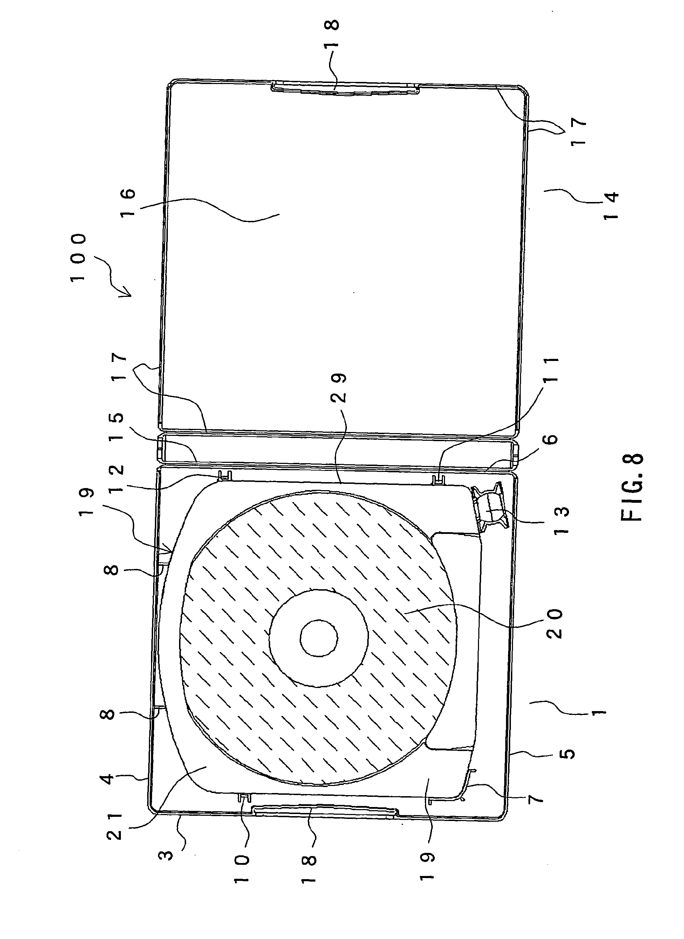

FIG. 6 is a top plan view of a case 100 according to this embodiment, FIG. 7A is a side view of the case 100, and FIG. 7B is an oblique view schematically illustrating the case 100. FIG. 8 is a top plan view of the state when the cartridge 19 has been installed in the case 100, while FIG. 9 is a lateral cross section thereof.

The case 100 is equipped with a bottom panel 2 that is substantially square in shape. The bottom panel 2 is arranged so as to be in opposition from the lower half 23 of the cartridge 19. Latching members 10, 11, and 12 for latching the cartridge are provided on the bottom panel 2. The latching member 10 and the latching member 11 are disposed at opposite diagonal corners of the cartridge 19. The latching member 11 and the latching member 12 are disposed along the lower half-side side wall 29 of the cartridge 19. The latching member 10 is disposed along the side wall on the opposite side from the lower half-side side wall 29 of the cartridge 19.

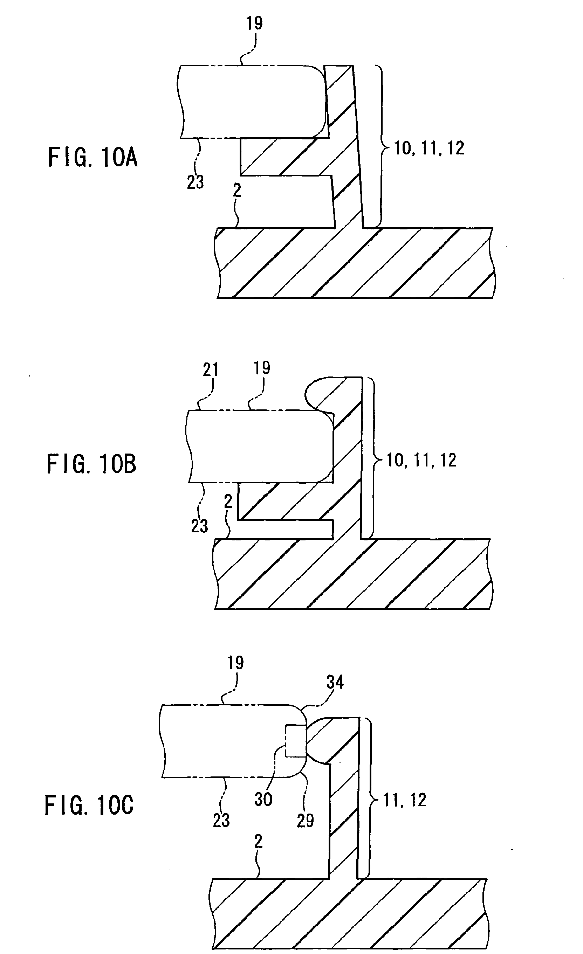

FIG. 10A is a cross section illustrating the configuration of the latching members 10, 11, and 12 provided for the case 100 according to this embodiment. The latching members 10, 11, and 12 are all configured the same. Each of the latching members 10, 11, and 12 is provided on the bottom panel 2 so as to press on the side walls of the cartridge 19 at an angle to the side wall of the cartridge 19. Each of the latching members 10, 11, and 12 has a holding component formed so as to hold the outer periphery of the lower half 23 of the cartridge 19. Thus, the cartridge 19 is sandwiched between the latching member 10 on one side and the latching members 11 and 12 on the other side, from the side faces of the lower half 23 of the cartridge 19. In this embodiment, the latching members are planar and are pushed against the side faces of the cartridge 19.

FIG. 10B is a cross section illustrating another configuration of the latching members provided for the case 100. The latching members 10, 11, and 12 along the side walls of the cartridge 19 are equipped with a vertical component extending substantially vertically from the bottom panel 2, a holding component formed so as to hold the outer periphery of the lower half 23 of the cartridge 19, and an engagement component formed so as to engage the top surface of the upper half 21 of the cartridge 19. Thus, the latching members 10, 11, and 12 may be provided so as to sandwich the cartridge 19 from the lower half 23 side and the upper half 21 side. In this embodiment, the latching members sandwich the upper half 21 and the lower half 23 of the cartridge 19, while pushing against the side faces of the cartridge 19.

FIG. 10C is a cross section illustrating yet another configuration of the latching members provided for the case 100. The latching members 11, and 12 may be in a configuration of biased engagement with respect to the groove portion 30 formed in the lower half-side side wall 29 of the cartridge 19. The latching member 10 may be in biased engagement with respect to a lower half side wall recess 32 of the cartridge 19, or a front/back detection hole 133 (FIGS. 1A, 2, and 3) provided for detecting the front or back of the cartridge 19 installed in a recording and reproduction device for recording to and reproducing from the disc 20. The groove portion 30 and the lower half side wall recess 32 correspond to the plurality of groove portions recessed from one of the pair of side faces that link the upper half 21 and the lower half 23 toward the other side face, and are formed in the direction of the front face and the rear face.

The example shown in FIGS. 6 to 9 is one in which the latching members 10, 11, and 12 are configured as in the configuration shown in FIG. 10C.

A release member 13 is provided to the bottom panel 2 of the case 100. The release member 13 is provided so as to push up on the lower half 23 of the cartridge 19 in order to release the latching of the cartridge 19 produced by the latching member 11. The release member 13 is disposed closer to the latching member 11 than to the latching members 10 and 12.

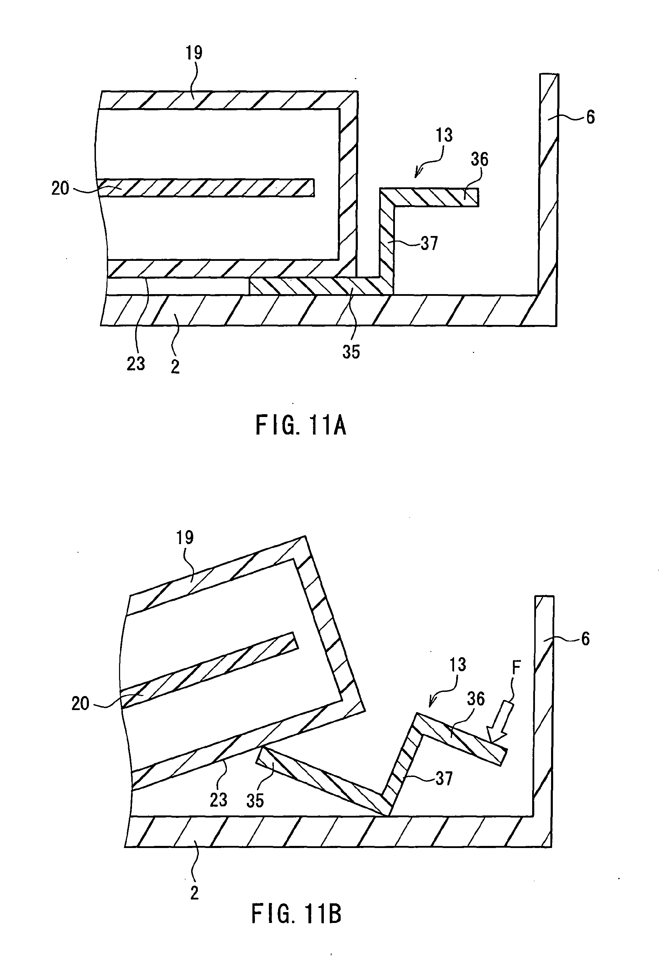

FIG. 11A is a cross section illustrating the construction of the release member 13. The release member 13 comprises an engagement release component 35 that is provided so as to be disposed between the bottom panel 2 of the case 100 and the lower half 23 of the cartridge 19 when the cartridge 19 is installed in the case 100; a pressure release component 36 that is provided so as to receive a pressing force F from the cartridge 19 side toward the bottom panel 2 side in order to release the latching of the cartridge 19 produced by the latching member 11; and a linking release component 37 that links the engagement release component 35 and the pressure release component 36. The linking release component 37 of the release member 13 is provided so as to protrude from the engagement release component 35 in the direction away from the bottom panel 2, and the pressure release component 36 is provided substantially parallel to the engagement release component 35 in the direction away from the cartridge 19.

The bottom panel 2 is provided with a corner positioning portion 7 for positioning the corner of the cartridge 19 being installed, and four pedestals 9 on which the installed cartridge 19 rests.

The case 100 further comprises four side panels 3, 4, 5, and 6 rising from the four sides of the bottom panel 2, and a lid body 14 coupled to the side panel 6 and rotatably provided so as to cover the installed cartridge 19, rotating around a rotational axis 15 of the side panel 6.

The side panel 4 is provided with forward positioning portions 8 for restricting the position of the front face of the installed cartridge 19. The cartridge is held in the area bounded by the corner positioning portion 7, the forward positioning portions 8, and the latching components 10, 11, and 12.

The lid body 14 is provided in order to prevent the cartridge 19 from being exposed to dust and other foreign matter in the event that the case is carried around with the cartridge 19 installed in the cartridge holding component, for example. The lid body 14 is made up of a lid 16 that is substantially parallel to the bottom panel 2, and lid side walls 17 of the lid 16. A locking component 18 that locks the lid body 14 and the case body 1 is provided in the approximate center of the side face 3. Another locking component 18 that engages with the locking component 18 of the side face 3 is provided to a lid side wall 17 of the lid body 14.

As shown in FIG. 7A, the top portions of the latching components 10, 11, and 12 protrude beyond the side face 5 of the case body 1 (the latching component 12 is not shown because it is behind the latching component 11).

As shown in FIGS. 8 and 9, when the cartridge 19 is installed in the case 100, the cartridge 19 is aligned with the corner positioning portion 7 and the forward positioning portions 8, and the upper half 21 is pressed near the three locations of engagement with the latching components 10, 11, and 12, for example, which allows the cartridge 19 to be installed in the case 100 against the biasing force of the latching components 10, 11, and 12.

As shown in FIG. 9, the latching component 10 is in biased engagement in a groove in which is engaged a tray engagement tab formed on the lower half side wall recess 32, and the latching components 11 and 12 are in biased engagement in the groove portion 30, the result being that there is a gap between the bottom panel 2 and the lower half 23 of the cartridge 19, and the cartridge 19 rests on the pedestals 9. The pedestals 9 are not absolutely necessary, but it is preferable to provide the pedestals 9 because if the cartridge 19 held in the case 100 is left for a long time with the gap from the bottom maintained only by the biasing force of the latching components 10, 11, and 12, there is the danger that the biasing force on the cartridge 19 could deform the cartridge 19, and the pedestals 9 prevent this from happening.

As discussed above, when the cartridge 19 is installed in the case 100 according to this embodiment, the upper half 21 is pressed against the biasing force of the latching components 10, 11, and 12, allowing the cartridge 19 to be held by the latching components 10, 11, and 12.

The removal of the cartridge 19 from the case 100 will now be described. The cartridge 19 cannot be taken out merely by tilting the case 100, for example, because the cartridge 19 is biased and latched by the latching components 10, 11, and 12. However, when the cartridge 19 is grasped with one hand and the case 100 with the other, the cartridge 19 can be pulled out and removed by the reverse procedure from installation. With the case 100 according to this embodiment, there is not enough room to insert a finger in the gap formed between the side faces of the cartridge 19 and the side faces 3, 4, 5, and 6 of the case body 1, so the cartridge 19 is grasped by inserting a finger along a diagonal of the cartridge 19. However, if the diameter of the disc 20 is 12 cm, even if the outer edges of the cartridge 19 are chamfered as in this embodiment, not all users will have large enough palms to grasp and install the cartridge 19 with just one hand, so it is conceivable that a user might not be able to remove the cartridge 19 from the case 100. In view of this, the release member 13 that releases the biasing force produced by the latching component 33 can be provided to the case 100 according to this embodiment, which eliminates the above problem.

The release member 13 lifts up the cartridge 19 through the principle of leverage, and the user removes the cartridge 19 by grasping the portion that has been lifted up from the bottom panel 2 of the case 100. This will be described in detail through reference to FIG. 11B.

FIG. 11B is a cross section illustrating the operation of the release member 13. The release member 13 comprises the engagement release component 35 that serves as the point of leverage application between the bottom panel 2 and the lower half 23 of the cartridge 19; the pressure release component 36 that functions as the leverage force point at which acting force is imparted to the engagement release component 35; and the linking release component 37 that links the engagement release component 35 and the pressure release component 36 and functions as the leverage fulcrum. When the cartridge 19 has been installed in the case 100, as shown in FIG. 11A, the engagement release component 35 is in the gap between the bottom panel 2 and the lower half 23 of the cartridge 19. When the pressure release component 36 is pressed toward the bottom panel 2 in this state, the corner joint between the engagement release component 35 and the linking release component 37 becomes the fulcrum of leverage, and the distal end of the engagement release component 35 is raised as shown in FIG. 11B. The side face of the cartridge 19 is lifted up in conjunction with the raising of the engagement release component 35, allowing the cartridge 19 to be removed easily by grasping the cartridge 19.

If this release member 13 is provided in the vicinity of one of the latching components 10, 11, and 12, the latching of just one of the latching components 10, 11, and 12 can be selectively released, so the pressing force applied to the pressure release component 36 can be smaller and the latching can be released in a shorter raising distance for the engagement release component 35 than with a configuration in which the release member 13 is provided at the center point between the latching components 11 and 12 as shown in FIG. 8, for example.

FIG. 11B makes the cartridge 19 appear as if it were deformed, but deformation of the cartridge 19 can be suppressed by appropriately adjusting the biasing force of the latching components 10, 11, and 12.

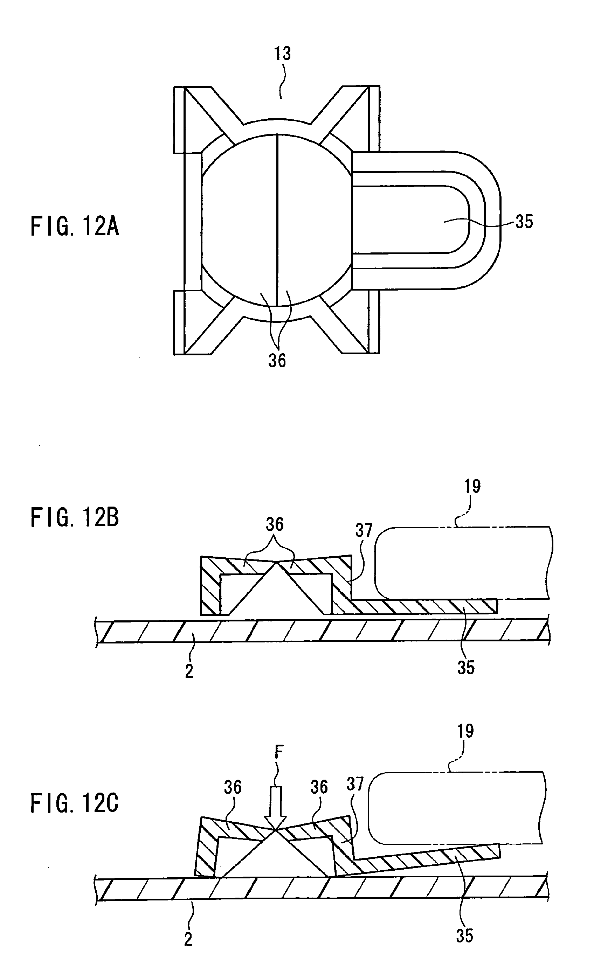

FIG. 12A is a plan view illustrating another construction of the release member provided to the case 100 according to this embodiment, FIG. 12B is a cross section illustrating another construction of the release member, and FIG. 12C is a cross section illustrating the operation of another release member.

The pressure release component 36 provided as another release member 13 is constructed so as to split in its approximate center when a pressing force F acts toward the bottom panel 2, and the linking release component 37 is constituted so as to move toward the cartridge 19. It is preferable to employ a configuration such as this because the pressure release component 36 is pressed a shorter distance and the engagement release component 35 is raised higher. FIGS. 6 and 8 show examples in which this other release member 13 is provided.

FIG. 7C is an oblique view schematically illustrating another construction of a case 100A according to an embodiment. As shown in FIG. 7C, the lid 16 may be connected to the upper side of the side panel 6.

FIG. 7D is an oblique view schematically illustrating yet another constitution of the case according to an embodiment. As shown in FIG. 7D, the lid 16 may be connected to the bottom panel 2, without providing the side panel 6.

As discussed above, with this embodiment, the release member 13 is provided on the bottom panel 2 so as to push up the lower half 23 of the cartridge 19 in order to release the latching of the cartridge 19 by the latching member 11, which is one of the plurality of latching members 10, 11, and 12. Accordingly, the release member 13 provided to the bottom panel 2 releases the latching of the cartridge 19 produced by the latching member 11 by pushing up the lower half 23 of the cartridge 19. Therefore, it is possible to provide a case 100 with which external vibration will not cause the cartridge 19 held inside to wobble and make noise, and which can hold a cartridge without placing undue load on the shutters 24 for opening and closing the opening window 25 used to expose the recording side of the disc 20 in its radial direction.

The cartridge used in this embodiment has an exposure hole formed in the upper half, but the present invention is not limited to this configuration. As discussed above, the upper half may be in the form of a plate that covers the entire lower half, or an opening window may be provided on the upper and lower halves as with an ordinary cartridge, and both of these types can be held in the case of the present invention. It is preferable to form an exposure hole in the upper half as in this embodiment because information recorded on the disc, such as words or symbols, can be written directly on the disc held in the cartridge, for example, and this written information related to the disc can be viewed while the disc is still held in the cartridge.

The cartridge described in this embodiment was configured such that a disc held inside could be taken out by providing a door, but the present invention is not limited to this. The door is not essential, and the case of the present invention also can be applied to a cartridge that does not permit the disc to be removed. Also, the door of the cartridge described in this embodiment was provided to the upper half, but may instead be provided to the side faces of the upper and lower halves.

Furthermore, the example described above had two latching components on a side end face of the cartridge, and one on the side face across from the side end face, but the present invention is not limited to this. If one or more latching components are provided to each opposing side face, this will prevent wobble of the installed cartridge. It is preferable for at least a pair of latching components to be disposed at substantially opposite diagonal corners of the cartridge, and for a release component to be provided in the vicinity of a latching component, because this will facilitate the raising of the corner of the cartridge, which is easier to grasp, by the release operation of the release component. Also, with a cartridge provided with a short groove in a side face and a long groove in a side end face, as in this embodiment, backward installation can be prevented by providing two latching components on the side end face side. If one or more latching components are provided at each of the mutually opposing side faces of the cartridge as above, the cartridge can be held while latched, but it is preferable to employ three latching components as in this embodiment, and provide a release component in the vicinity of one of the two latching components that latch the cartridge side face, because the corner of the unlatched cartridge will be able to move up and down a greater distance, making it easier to grasp and remove.

The engagement release component described in the above embodiment was disposed between the bottom and the cartridge, but the present invention is not limited to this. The engagement release component also can be embedded in the bottom. When a configuration is employed in which the engagement release component is embedded in the bottom, the cartridge can be held while resting on the bottom, which means that the cartridge can be held more stably. This, however, requires a precise fit between the release component and the hole in which the engagement release component is embedded.

A case in which the opening and closing operation was accomplished by the rotation of shutters was described in the above embodiment, but the present invention is not limited to this. It is also possible to use a configuration in which the shutters slide substantially perpendicular to a pair of straight lines of the opening window. When sliding shutters are employed, however, the upper and lower half end edges of the cartridge engaging with the shutters must be straight. Furthermore, the shutters were provided between the lower half and the disc, but may instead be provided on the outside of the upper and lower halves as with specialized shutters.

Also, a configuration in which the main body was covered with a lid was described in the above embodiment, but the present invention is not limited to this. Naturally, if no exposure hole is formed in the upper half, then all that is needed is a main body capable of latching and fixing the cartridge. A configuration that entails only a main body has the advantage of requiring fewer members, which reduces costs.

As described above, with the case according to this embodiment, regardless of the external shape of the cartridge, the location on the cartridge where the shutters are disposed, and the mechanism for opening and closing the shutters, a cartridge can be latched and held without placing undue load on the shutters, which is effective for eliminating problems such as scratching of the cartridge caused by the cartridge being loosely inserted in the interior of the case while being carried around, or the adhesion of dust or other foreign matter to the cartridge and/or the disc held in the cartridge. In particular, a configuration that allows the corner of the cartridge to be preferentially grasped is possible, so in the case of a phase change type of recordable disc, this is effective in that it completely eliminates the problems posed by touching the disc surface directly with the hands, namely, recording characteristics being affected by fingerprints adhering to the disc surface.

### Industrial Applicability

As detailed above, the present invention provides a case with which external vibration will not cause a cartridge held inside to wobble and make noise, and which can hold a cartridge without placing undue load on the cartridge shutters.

## Claims

1. A case for holding a cartridge, provided with:
a lower half and an upper half for holding a disc-shaped information medium;
an opening window provided in the lower half, for exposing part of the disc-shaped information medium in its radial direction;
shutters for opening and closing the opening window;
a front face that engages with the shutters and links the upper half and the lower half;
a rear face that is on the opposite side from the front face with the disc-shaped information medium therebetween, and that links the upper half and the lower half;
a pair of side faces that link the front face, the rear face, the upper half, and the lower half; and
a plurality of groove portions that are recessed from one of the pair of side faces toward the other side face and are formed in the direction of the front face and the rear face,
said case comprising:
a bottom panel provided so as to be facing the lower half of the cartridge;
a plurality of latching members provided to the bottom panel, for latching the cartridge by engaging with any of the plurality of groove portions; and
a release member disposed at a location near one of the plurality of latching members, for releasing the latching of the cartridge with the plurality of latching members and the plurality of groove portions.

2. The case according to claim 1, wherein two of the plurality of latching members are disposed at opposite diagonal corners of the cartridge.

3. The case according to claim 1, wherein the release member is provided at the bottom panel so as to lift up the lower half of the cartridge in order to release the latching of the cartridge with said one latching member.

4. The case according to claim 1 or 3, wherein the release member is provided with said one latching member via a corner of the cartridge in a state in which the cartridge has been installed.

5. The case according to claim 4, wherein the release member is provided at the rear face of the cartridge in a state in which the cartridge has been installed.

6. The case according to claim 1, wherein the release member includes:
an engagement release component provided so as to be disposed between the bottom panel and the lower half of the cartridge when the cartridge has been installed in the case;
a pressure release component provided so as to receive pressing force from the cartridge side toward the bottom panel side in order to release the latching of the cartridge with said one of the plurality of latching members; and
a linking release component that links the engagement release component and the pressure release component.

7. The case according to claim 1, wherein the bottom panel is square in shape, and
said case further comprising:
four side panels rising from the four sides of the bottom panel; and
a lid coupled to one of the four side panels and provided rotatably around said one side panel so as to cover the installed cartridge.

8. The case according to claim 7, wherein the release member is disposed at one of the corners formed by said one side panel.

9. The case according to claim 8, wherein a positioning portion for positioning one cartridge corner that is adjacent to the above-mentioned cartridge corner with which the release member engages is provided at another corner adjacent to the corner of the side panel where the release member is disposed.

10. The case according to claim 1, wherein the sides of the upper half and the lower half with which the front face of the cartridge engages are chamfered in a rounded shape, and forward positioning portions for positioning the front face having the rounded chamfering are formed on one of the side panels adjacent to the side panel to which the lid is provided.

11. The case according to claim 1, wherein at least one pedestal having a height substantially equal to the gap between the lower half and the bottom panel in a state in which the cartridge has been installed is provided within a surface area corresponding to a projection of the cartridge onto the bottom panel.

## Amended claims

### Amended claims under Art. 19.1 PCT

1. (amended) A case for holding a cartridge, provided with:
a lower half and an upper half for holding a disc-shaped information medium;
an opening window provided in the lower half, for exposing part of the disc-shaped information medium in its radial direction;
shutters for opening and closing the opening window;
a front face that engages with the shutters and links the upper half and the lower half;
a rear face that is on the opposite side from the front face with the disc-shaped information medium therebetween, and that links the upper half and the lower half;
a pair of side faces that link the front face, the rear face, the upper half, and the lower half; and
a plurality of groove portions that are recessed from one of the pair of side faces toward the other side face and are formed in the direction of the front face and the rear face,
said case comprising:
a bottom panel provided so as to be facing the lower half of the cartridge;
a plurality of latching members provided to the bottom panel, for latching the cartridge by engaging with any of the plurality of groove portions, the plurality of latching members including two latching members that are disposed at opposite diagonal corners of the cartridge; and
a release member disposed at a location near one of the two latching members disposed at opposite diagonal corners of the cartridge, for releasing the latching of the cartridge with the plurality of latching members and the plurality of groove portions.

2. (canceled)

3. The case according to claim 1, wherein the release member is provided at the bottom panel so as to lift up the lower half of the cartridge in order to release the latching of the cartridge with said one latching member.

4. The case according to claim 1 or 3, wherein the release member is provided via said one latching member and a corner of the cartridge in a state in which the cartridge has been installed.

5. The case according to claim 4, wherein the release member is provided at the rear face of the cartridge in a state in which the cartridge has been installed.

6. The case according to claim 1, wherein the release member includes:
an engagement release component provided so as to be disposed between the bottom panel and the lower half of the cartridge when the cartridge has been installed in the case;
a pressure release component provided so as to receive pressing force from the cartridge side toward the bottom panel side in order to release the latching of the cartridge with said one of the plurality of latching members; and
a linking release component that links the engagement release component and the pressure release component.

7. The case according to claim 1, wherein the bottom panel is square in shape, and
said case further comprising:
four side panels rising from the four sides of the bottom panel; and
a lid coupled to one of the four side panels and provided rotatably around said one side panel so as to cover the installed cartridge.

8. The case according to claim 7, wherein the release member is disposed at one of the corners formed by said one side panel.

9. The case according to claim 8, wherein a positioning portion for positioning one cartridge corner that is adjacent to the above-mentioned cartridge corner with which the release member engages is provided at another corner adjacent to the corner of the side panel where the release member is disposed.

10. The case according to claim 1, wherein the sides of the upper half and the lower half with which the front face of the cartridge engages are chamfered in a rounded shape, and forward positioning portions for positioning the front face having the rounded chamfering are formed on one of the side panels adjacent to the side panel to which the lid is provided.

11. The case according to claim 1, wherein at least one pedestal having a height substantially equal to the gap between the lower half and the bottom panel in a state in which the cartridge has been installed is provided within a surface area corresponding to a projection of the cartridge onto the bottom panel.
